Europäisches Patentamt

European Patent Office

Office européen des brevets

(11) Veröffentlichungsnummer: **0 432 133 A1**

## (12) EUROPÄISCHE PATENTANMELDUNG

(21) Anmeldenummer: 91100278.0

(22) Anmeldetag: 10.01.91

(51) Int. Cl.⁵: **A01G 9/24, A01G 9/22**

(30) Priorität: 21.05.90 DE 9005767 U

(43) Veröffentlichungstag der Anmeldung:
12.06.91 Patentblatt 91/24

(84) Benannte Vertragsstaaten:
AT BE CH DE DK ES FR GB GR IT LI LU NL

(71) Anmelder: **Buchner, Josef**
**Lindenweg 3**
**W-8867 Oettingen(DE)**

(72) Erfinder: **Buchner, Josef**
**Lindenweg 3**
**W-8867 Oettingen(DE)**

(74) Vertreter: **Patentanwälte Viering & Jentschura**
**Steinsdorfstrasse 6**
**W-8000 München 22(DE)**

(54) Hallenfoliendach, insbesondere Gewächshaus-Foliendach.

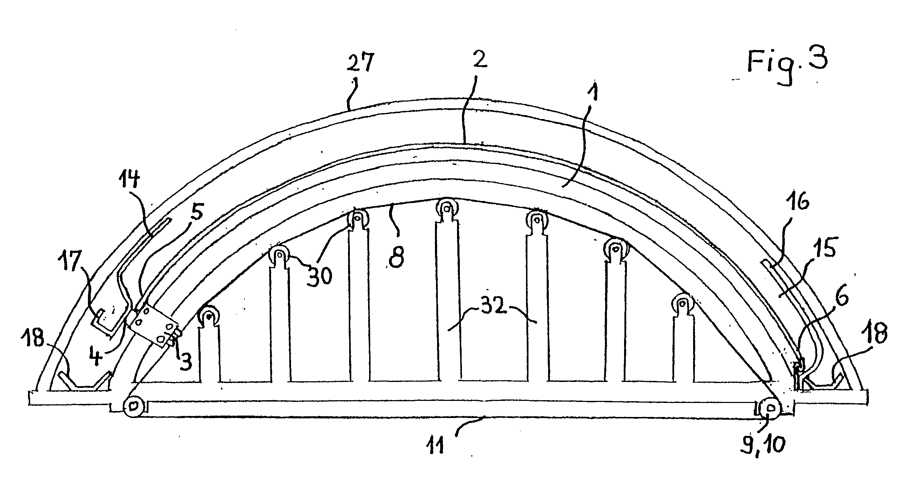

(57) Hallen-Foliendach, insbesondere Gewächshaus-Foliendach, in Form eines Satteldaches oder vorzugsweise eines Tonnendaches, mit mehreren im Abstand voneinander verlaufenden Dachquerträgern (1), die mit einer ein- oder doppelwandigen Folie (2) überspannt sind, wobei zum schnellen Öffnen und Schließen des Foliendaches auf mehreren oder allen Dachquerträgern (1) je ein längs diesen verfahrbarer Laufschlitten (3) angeordnet ist und die Laufschlitten (3) über eine Profilleiste (4) miteinander verbunden sind, an der die Folie (2) mit ihrem einen Seitenrand (5) befestigt ist, die mit ihrem gegenüberliegenden Seitenrand (6) ortsfest festgelegt ist. Zum Antreiben der Laufschlitten (3) kann an wenigstens einem Laufschlitten (3) oder an der Profilleiste (4) ein als Band oder Seil ausgebildeter Zugstrang (8, 11) befestigt sein, der auf motorisch angtriebenen Antriebsrollen (9, 10) aufwickelbar bzw. von diesen abwickelbar ist. (Fig. 3)

Fig.1

# HALLEN-FOLIENDACH, INSBESONDERE GEWÄCHSHAUS-FOLIENDACH

Die Erfindung betrifft ein Hallen-Foliendach, insbesondere Gewächshaus-Foliendach, in Form eines Satteldaches oder vorzugsweise eines Tonnendaches, mit mehreren im Abstand voneinander verlaufenden Dachquerträgern, die mit einer ein- oder doppelwandigen Folie überspannt sind.

Bei bekannten Folien-Gewächshäusern sind die das Dach bildenden transparenten Kunststoffolien an beiden Dachseiten fest eingespannt. Um in dem Gewächshaus Freilandbedingungen herzustellen, kann ggf. die Folie abmontiert werden, was jedoch einen hohen Montageaufwand bedeutet. Aufgrund des ebenfalls relativ langwierigen Vorgangs für das erneute Montieren der der Folie kann außerdem der Innenraum des Gewächshauses bei einem Wetterumbruch vorübergehend ungünstigen Witterungsbedingungen ausgesetzt sein.

Durch die Erfindung wird ein Hallen-Foliendach eingangs erwähnter Art geschaffen und so ausgebildet, daß der Innenraum in kürzester Zeit zu der Umgebung hin geöffnet und wieder geschlossen werden kann.

Dies wird erfindungsgemäß dadurch erreicht, daß auf mehreren oder allen Dachquerträgern je ein längs diesen verfahrbarer Laufschlitten angeordnet ist und die Laufschlitten über eine Profilleiste miteinander verbunden sind, an der die Folie mit ihrem einen Seitenrand befestigt ist, die mit ihrem gegenüberliegenden Seitenrand ortsfest festgelegt ist.

Daher können die Laufschlitten nach Bedarf von dem einen Dachrand zu dem anderen verfahren werden, wobei sie die Folie an deren einen Seitenrand, der an der Profilleiste befestigt ist, mitnehmen und dadurch die Folie beim Öffnen des Daches zu dem anderen Dachrand hin zusammenschieben und beim Schließen des Daches wieder zurückziehen. Die die Laufschlitten verbindende Profilleiste wirkt hierbei als Mitnehmer der Laufschlitten, so daß diese miteinander synchronisiert verfahren werden. In einer Abwandlung dieser Ausführungsform ist es jedoch auch möglich, an dem Dachrand, an dem die Folie mit ihrem einen Seitenrand ortsfest festgelegt ist, oder an der Profilleiste eine drehbare Wickelstange anzuordnen, auf welche die Folie zum Öffnen des Daches aufgewickelt wird und von welcher die Folie zum Schließen des Daches wieder abgewickelt wird, wobei die Synchronisierung der Laufschlitten das saubere Aufwickeln der Folie begünstigt. Jedoch wird die Ausführungsform, bei welcher die Folie zum Öffnen des Daches nur zusammengeschoben wird, bevorzugt.

Die Erfindung ist nicht auf Gewächshäuser beschränkt, wenngleich Folien-Gewächshäuser das bevorzugte Anwendungsgebiet der Erfindung sind. Die Erfindung läßt sich vielmehr auch mit Vorteil bei anderen Hallen-Foliendächern anwenden, wie z.B. für Schwimmhallen und Tennishallen.

Wenngleich die Laufschlitten auf den Dachquerträgern, an denen sie geführt sind, gleitend verfahrbar sein können, weisen die Laufschlitten bevorzugt Laufrollen auf, die an dem zugeordneten Dachquerträger abrollen.

Die Laufschlitten können insbesondere bei kurzen Foliendächern oder Dachabschnitten manuell verfahrbar sein, wozu ein geeignetes Werkzeug wie eine Stange oder ein Seil vorgesehen sein kann. Bevorzugt ist jedoch ein Antrieb für das Verfahren der Laufschlitten vorgesehen. Hierzu können die Laufschlitten mit einem Handantrieb, wie einem Handkurbeltrieb für ein an wenigstens einem Laufschlitten befestigtes Zugseil, oder - vorzugsweise - mit einem Antriebsmotor, insbesondere einem Elektromotor, gekuppelt sein. Hierzu kann zum Antreiben der Laufschlitten an wenigstens einem Laufschlitten oder an der Profilleiste ein als Kette, Band oder Seil ausgebildeter Zugstrang befestigt sein, der um wenigstens eine Antriebsrolle oder ein Antriebsrohr verläuft. Der Zugstrang kann nach einer anderen Ausführungsform auch auf einen Antriebshebel wirken, der seinerseits an den Laufschlitten angelenkt ist. Jedoch ist es auch möglich, wenigstens eine Teilanzahl der Laufschlitten selbstfahrend auszubilden, d.i. mit einem Eigenantrieb auszustatten, wobei beispielsweise ein von einem Elektromotor, der auf dem Laufschlitten befestigt ist, angetriebenes Ritzel in eine entlang dem zugeordneten Dachquerträger verlaufende Zahnstange eingreift. Bei Ausstattung von mehreren Laufschlitten mit derartigen Zahnstangentrieben ist es auch möglich, einen diesen gemeinsamen Elektromotor auf einem der Laufschlitten vorzusehen, der mit den Ritzeln der Zahnstangentriebe über eine gemeinsame Antriebswelle gekuppelt ist.

Für die bevorzugte Ausführungsform, bei welcher das Antreiben der Laufschlitten über einen Zugstrang erfolgt, kann bei einer Anwendung der Erfindung beispielsweise an einem Satteldach, bei welchem die eine Dachhälfte oder beide Dachhälften gesondert erfindungsgemäß geöffnet werden können, vorgesehen sein, daß die Laufschlitten mithilfe des Zugstrangs nur für ihre Aufwärtsbewegung vom unteren Dachrand bis zum Giebel angetrieben verfahrbar sind und ihre Abwärtsbewegung durch Nachlassen des Zugstrangs unter der Schwerkraft erfolgt. Insbesondere bei einem erfindungsgemäßen Foliendach in Form eines Tonnendaches jedoch, bei welchem die Dachquerträger gebogen verlaufen, greift der Zugstrang an dem Laufschlitten vorzugsweise für beide von dessen Fahrrichtungen an, so daß sowohl das Öffnen als auch das Schließen des Daches angetrieben erfolgt.

Hierzu kann der Zugstrang als Endlosstrang ausgebildet sein, der an beiden Dachrändern um eine Umlenkrolle geführt ist, von denen die eine für beide Drehrichtungen angetrieben ist oder von denen beide abwechselnd, jedoch für entgegengesetzte Drehrichtungen antreibbar sind, wobei im letzteren Fall beim Antreiben der einen Umlenkrolle die andere freiläuft. Allerdings kann in diesen Fällen zwischen der Antriebsrolle und dem Zugstrang insbesondere bei großen Foliendächern ein unerwünschter Schlupf auftreten, wenn nicht für ein formschlüssiges Ineinandergreifen des Zugstrangs und der Antriebsrolle wie beispielsweise durch Verwendung einer Kette und eines Kettenrades gesorgt wird. Vorgezogen wird daher, einen Zugstrang mit zwei freien Endabschnitten vorzusehen, zwischen denen der Laufschlitten bzw. die Profilleiste an dem Zugstrang direkt oder indirekt befestigt ist und die ihrerseits an der Antriebsrolle bzw. dem Antriebsrohr aufwickelbar bzw. abwickelbar befestigt sind. Hierdurch wird ein Antriebsschlupf vermieden und eine störunanfällige Antriebsverbindung erreicht.

In diesem Fall kann, wie weiter oben im Zusammenhang mit angetriebenen Umlenkrollen beschrieben, an jedem der beiden Dachränder eine gesondert angetriebene Antriebsrolle oder ein gesondert angetriebenes Antriebsrohr zum Auf- bzw. Abwickeln des jeweiligen Endabschnittes des Zugstranges vorgesehen sein. Es ist auch möglich, zwei gesondert angetriebene Antriebsrollen an demselben Dachrand vorzusehen, wenn der Zugstrang an dem anderen Dachrand mit einer Umlenkrolle umgelenkt wird. Bevorzugt jedoch sind die beiden Endabschnitte des Zugstrangs auf zwei koaxialen, fest miteinander gekuppelten Antriebsrollen bzw. einem gemeinsamen Antriebsrohr auf- bzw. abwickelbar befestigt und werden die Antriebsrollen bzw. wird das Antriebsrohr von einem reversierbaren Motor angetrieben, wobei die Umschlingungsrichtungen der Endabschnitte auf der Antriebsrolle bzw. dem Antriebsrohr einander entgegengesetzt sind. Durch die einander entgegengesetzten Umschlingungsrichtungen der Endabschnitte des Zugstrangs wird je nach Drehrichtung des Motors der eine Endabschnitt auf seine Antriebsrolle bzw. das Antriebsrohr aufgewickelt und gleichzeitig der andere Endabschnitt von seiner Antriebsrolle bzw. dem Antriebsrohr abgewickelt. Die entgegengesetzten Umschlingungsrichtungen lassen sich z.B. in einfacher Weise erzielen, wenn der Zugstrang ggf. nach Umlenkung mittels einer Umlenkrolle mit seinen Endabschnitten von diametral entgegengesetzten Seiten her auf die Antriebsrollen bzw. das Antriebsrohr einläuft.

Die Antriebsrollen bzw. das Antriebsrohr können an irgendeiner passenden Stelle, insbesondere an einem der Dachränder angeordnet sein. In einer bevorzugten Ausgestaltung der Erfindung jedoch sind mehrere Dachabschnitte hintereinander ausgebildet, die gesonderte Folien, Dachquerträger, Laufschlitten und Profilleisten gemäß der Erfindung aufweisen, wobei der Zugstrang und die Antriebsrollen bzw. das Antriebsrohr allen Dachabschnitten gemeinsam sind, so daß alle Dachabschnitte von demselben Motor angetrieben gemeinsam geöffnet und geschlossen werden können. In diesem Fall können die gemeinsamen Antriebsrollen bzw. kann das gemeinsame Antriebsrohr beispielsweise an dem vorderen Dachrand des ersten Dachabschnitts angeordnet sein, von wo aus der Zugstrang mit einem oberen Trum, an dem die jeweiligen Laufschlitten bzw. Profilleisten der einzelnen Dachabschnitte direkt oder indirekt befestigt sind, zum hintersten Dachrand des letzten Dachabschnittes verläuft, dort an einer Umlenkrolle umgelenkt wird und mit einem unteren Trum wieder zu den Antriebsrollen bzw. dem Antriebsrohr zurückläuft. Es ist jedoch auch möglich, die Antriebsrollen bzw. das Antriebsrohr beispielsweise unter einem Rand eines mittleren Dachabschnittes anzuordnen und den Zugstrang in Höhe des vorderen Dachrandes des ersten Dachabschnittes und des hinteren Dachrandes des letzten Dachabschnittes jeweils an einer Umlenkrolle umzulenken.

Natürlich ist es bei Ausbildung mehrerer Dachabschnitte auch möglich, für jeden oder mehrere von ihnen gesonderte Antriebe vorzusehen, falls gewünscht wird, diese Dachabschnitte unabhängig voneinander öffnen und schließen zu können.

Zum Aufwickeln der Endabschnitte des Zugstrangs auf einer Antriebsrolle oder einem Antriebsrohr ist es erwünscht, einen Wickel zu erhalten, bei dem die Wickelwindungen sauber nebeneinander liegen. Da hierbei die Einlaufstelle des Zugstrangs auf die Antriebsrolle bzw. das Antriebsrohr mit zunehmender Wickellänge axial wandert, andererseits jedoch bei einer Befestigung des Zugstrangs unmittelbar an dem betreffenden Laufschlitten oder der Profilleiste die Befestigungsstelle des Zugstrangs sich während des Öffnens und des Schließen des Foliendaches radial zur Drehachse der Rolle bzw. des Rohrs bewegt, ändert sich der Winkel zwischen der Drehachse und dem zu dem Laufschlitten führenden Zugstrangabschnitt aufgrund der größer werdenden Länge des Wickels umso stärker, je mehr sich der Laufschlitten ihm nähert, wodurch ein sauberes Aufwickeln des Zugstrangabschnittes beeinträchtigt sein kann. Um dies zu vermeiden, kann der Zugstrangabschnitt, der zwischen dem Laufschlitten und der Antriebsrolle bzw. dem Antriebsrohr verläuft, über eine nahe der Antriebsrolle bzw. dem Antriebsrohr angeordnete Umlenkrolle geführt sein, die auf ihrer Achse axial verschiebbar ist und daher vom Zugstrang entsprechend der Längenzunahme des Wickels axial mitgenommen wird.

Auch bei einem erfindungsgemäßen Hallen-Foliendach in der Ausbildung als Tonnendach mit bogenförmigen Dachquerträgern ist es möglich, den Zugstrang von dem betreffenden Laufschlitten aus zu beiden Dachrändern hin geradlinig zu führen. Dann ändert sich jedoch aufgrund des bogenförmigen Verlaufes der Dachquerträger die Länge des Zugstranges zwischen den Dachrändern während des Verfahrens des Laufschlittens. Um dennoch eine Aufwickelrate gleich der Abwickelrate für den Zugstrang zu erreichen, kann die Längenänderung zwar durch Einschalten einer Schraubenfeder in den Zugstrang kompensiert werden, was jedoch einen erhöhten Antriebsbedarf für das Spannen der Feder darstellt. Daher ist der Zugstrang entlang des betreffenden gebogenen Dachquerträgers vorzugsweise für einen zu demselben im wesentlichen abstandsgleichen Verlauf geführt. Hierzu kann eine entsprechend bogenförmige Führungsschiene vorgesehen sein, jedoch wird es bevorzugt, entlang einer dem Bogenverlauf des Dachquerträgers entsprechenden Bahn angeordnete Führungsrollen für den Zugstrang vorzusehen.

Gemäß einer besonders vorteilhaften Ausführungsform ist der Zugstrang an dem betreffenden Laufschlitten bzw. der Profilleiste nicht unmittelbar, sondern mittelbar über einen Antriebshebel befestigt. Insbesondere kann hierbei der Antriebshebel mit seinem oberen Ende an den Laufschlitten und mit seinem unteren Ende an das Gewächshaus in der Quermitte des jeweiligen Dachabschnittes schwenkbar angelenkt sein, wobei der Zugstrang zwischen den beiden Anlenkstellen mittels einer längs des Antriebshebels verschiebbaren Gleitführung an dem Antriebshebel angreift. Diese Ausführungsform hat den Vorteil, daß der Zugstrang auch bei einer bogenförmigen Bewegungsbahn des Laufschlittens geradgeführt sein kann, wodurch die Zugstrangführung wesentlich vereinfacht wird, ohne daß ein Längenausgleich des Zugstranges, bspw. durch eine Schraubenfeder, erforderlich ist.

Wenn die Tonnendachabschnitte nicht die Form eines Kreisbogens aufweisen oder der Antriebshebel nicht im Kreismittelpunkt des jeweiligen Tonnendachabschnittes gelagert ist, ist der Antriebshebel vorzugsweise als ein Teleskoparm ausgebildet oder das untere Ende des Antriebshebels ist in Form einer längs desselben verschiebbaren Gleitführung an das Gewächshaus angelenkt. Durch diese "doppelte" Gleitführung kann der Antriebshebel im wesentlichen beliebigen Dachgeometrien folgen.

Der besondere Vorteil dieser Ausführungsform liegt in der einfachen Zugstrangführung, die relativ unempfindlich gegen Längenänderungen ist, die bspw. durch Kältekontraktion erfolgen können. Weiter liegt eine günstige Kraftübertragung auf den Laufschlitten vor, da die auf den Laufschlitten einwirkende Kraft im wesentlichen in Bewegungsrichtung des entlang einer bogenförmigen Bahn geführten Laufschlittens wirkt, obgleich die Zugstrangführung linear ist. Durch den Antriebshebel ergibt sich auch ein günstiges Übersetzungsverhältnis, wodurch im Schließbereich eine höhere Kraft auf den Laufschlitten übertragen wird. Dadurch läßt sich das Dach ziemlich straff spannen, wodurch ein Flattern der Dachfolie wegen Wind vermieden wird.

Zur weiteren Verringerung des Antriebsbedarfs wird es vorgezogen, daß die Folie an ihrem parallel zu den Dachquerträgern verlaufenden freien Folienrändern auf den äußeren Dachquerträgern aufliegende Gleiter aufweist, die an Ringen geführt sind. Diese Führungsringe können an den äußeren Dachquerträgern angeordnet sein, jedoch kann in weiterer Ausgestaltung dieser Ausführungsform seitlich oberhalb der äußeren Dachquerträger jeweils eine die Ringe führende Gleitstange angeordnet sein. Hierdurch kann gleichzeitig ein leichtes Spannen der Folie in Richtung quer zu den Dachträgern erreicht werden. Gegebenenfalls können unter der Folie an dieser zur weiteren Verringerung der Reibung zusätzliche Gleiter entlang der zwischen den äußeren Dachquerträgern angeordneten Dachquerträger befestigt sein, auf denen die zusätzlichen Gleiter gleiten.

Zur besseren Mitnahme der Folie für deren Zusammenschieben kann an der Profilleiste eine den Folienrand mit Abstand übergreifende, eine Folienmitnehmertasche ausbildende Mitnehmerleiste angeordnet sein. Im übrigen ist es auch möglich, die Folie für ihr sauberes Zusammenfalten beim Öffnen des Daches mit auf den Dachquerträgern sitzenden Schlaufen oder Ringen nach Art von Gardinenringen zu versehen. Ferner kann an demjenigen Dachrand, an dem die Folie mit ihrem einen Seitenrand festgelegt ist, ein diesen mit Abstand übergreifender, eine Folienaufnahmetasche für die zusammengeschobene Folie bildender Profilstreifen angeordnet sein. Falls zusätzlich zu der Folienaufnahmetasche die weiter oben angesprochene Mitnehmertasche vorhanden ist, ist die Weite der Mitnehmertasche vorzugsweise größer als diejenige der Aufnahmetasche, so daß die Mitnehmerleiste über den Profilstreifen geschoben werden kann und daher die zusammengeschobene Folie bei vollständig geöffnetem Foliendach in einem von der Mitnehmerleiste und dem Profilstreifen gebildeten geschlossenen Kasten geschützt aufgenommen ist.

Das Profil der Dachquerträger ist weitgehend beliebig, solange sie die erforderliche Steifigkeit haben und als Lauf- und Führungsschienen für die Laufschlitten dienen können. Das Vollprofil oder vorzugsweise Hohlprofil kann daher quadratisch, länglich rechteckig, sechseckig oder T- oder Doppel-T-förmig od. dergl. sein. Gegenwärtig bevorzugt wird jedoch ein Rundprofil, wobei die Laufschlitten mit Laufrollen ausgestattet sind und wenigstens eine der Laufrollen mit Führungsflanschen versehen ist oder die Form einer Seilrolle hat. Die andere Laufrolle kann z.B. eine Zylinderrolle sein.

Die Profilleiste und auch der Profilstreifen können wenigstens zum Teil als Regenrinnen ausgebildet sein. Hierbei können die Mitnehmertasche und die Folienaufnahmetasche an ihrem Boden perforiert sein, damit sich in ihnen ansammelndes Wasser in die Regenrinnen abfließen können.

Als Material für die Dachquerträger und die Profilteile kann ein Kunststoffmaterial oder vorzugsweise ein Metallmaterial insbesondere aus Aluminium oder einer Aluminiumlegierung verwendet werden.

Um ein Flattern einer doppelwandigen Folie des erfindungsgemäßen Foliendaches bei geschlossenem Dach zu verringern, kann in der doppelwandigen Folie zwischen deren Wänden ein aufblasbarer Schlauch zum Spannen der Folienwände ausgebidet sein. Ferner können, um den Faltvorgang für die Folie beim Öffnen des Daches zu begünstigen und ein Aufblähen der Folie duch Wind zu verhindern, im Abstand über den Dachquerträgern ein Folienflattern begrenzende Begrenzungsstangen vorgesehen sein.

Das erfindungsgemäße Hallen-Foliendach wird im folgenden anhand von Ausführungsformen eines Gewächshaus-Foliendaches erläutert, die wenigstens schematisch aus der Zeichnung ersichtlich sind. In der Zeichnung zeigt:

Fig. 1 eine Stirnansicht eines erfindungsgemäßen Foliendaches,

Fig. 2 eine Ansicht eines Laufschlittens,

Fig. 3 eine Stirnansicht einer anderen Ausführungsform eines erfindungsgemäßen Foliendaches,

Fig. 4 eine Stirnansicht eines zwei gesonderte Dachabschnitte überspannenden erfindungsgemäßen Foliendaches,

Fig. 5 eine Stirnansicht einer weiteren Ausführungsform mit einem Antriebshebel und mit beliebig vielen Dachabschnitten, und

Fig. 6 bis 8 jeweils Details erfindungsgemäßer Foliendächer.

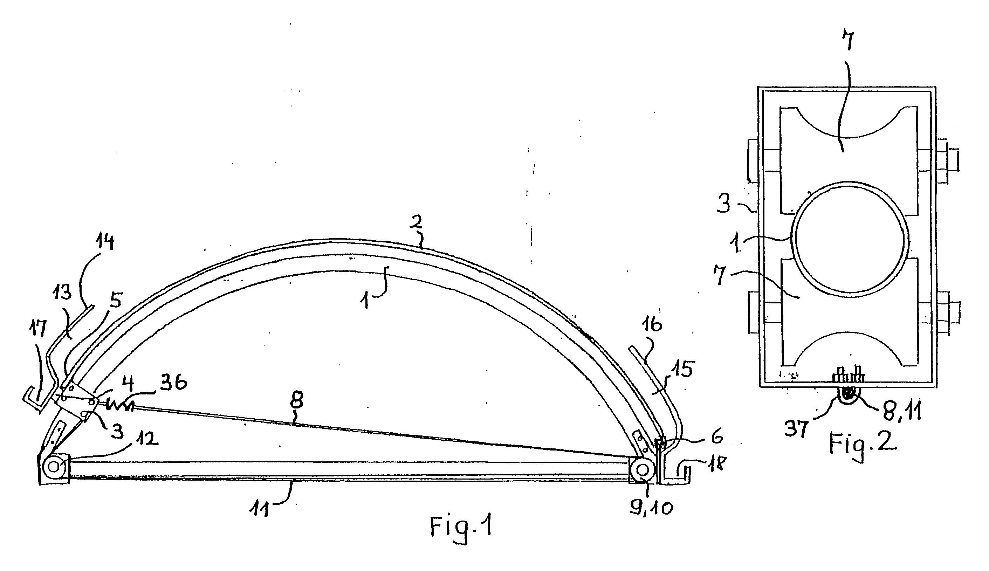

Das in Fig. 1 dargestellte Hallen-Foliendach in der Form eines Tonnendaches weist eine Mehrzahl von zu Kreisbogensegmenten gebogenen Dachquerträgern 1, von denen nur einer gezeigt ist, und eine die Dachquerträger 1 überspannende Folie 2 auf, die mit ihrem einen Seitenrand 6 an dem einen Dachseitenrand ortsfest festgelegt ist und mit ihrem anderen Seitenrand 5 an einer Profilleiste 4 befestigt ist. Auf jedem Dachquerträger 1 ist ein Laufschlitten 3 verfahrbar, der an dem zugeordneten Dachquerträger seitlich geführt ist und über die Profilleiste 4, die an den Laufschlitten 3 befestigt ist, mit den anderen Laufschlitten 3 gekuppelt ist. Durch Verfahren der Laufschlitten 3 auf den Dachprofilträgern 1 kann daher die Folie 2 von dem einen Dachrand zu dem anderen Dachrand hin zusammengeschoben werden, so daß das Foliendach geöffnet wird, oder von dem zweiten Dachrand zurück zum ersten auseinandergezogen werden, um das Foliendach wieder zu schließen.

Zum Antreiben der Laufschlitten 3 in der einen oder anderen Fahrtrichtung ist an einem oder mehreren der Laufschlitten 3 ein Zugstrang mit einem ersten Zugstrangabschnitt 8 befestigt, der zu einer von einem umsteuerbaren Elektromotor (nicht gezeigt) in beiden Drehrichtungen antreibbaren Antriebsrolle 9 verläuft, die an demjenigen Dachrand angeordnet ist, an welcher der ortsfest festgelegte Seitenrand 6 der Folie 2 liegt. Außerdem ist an einem oder mehreren der Laufschlitten 3 ein zweiter Zugstrangabschnitt 11 befestigt, der um eine Umlenkrolle 12 an demjenigen Dachrand, an dem sich die Laufschlitten 3 bei geschlossenem Foliendach befinden, verläuft und sich weiter zu einer zweiten Antriebsrolle 10 erstreckt, die an demselben Dachrand wie die erste Antriebsrolle 9 koaxial zu dieser angeordnet ist und von dem Motor gemeinsam mit der ersten Antriebsrolle 9 angetrieben wird. Die Endabschnitte des Zugstrangs 8, 11 werden je nach Drehrichtung des Motors auf die zugeordnete Antriebsrolle aufgewickelt oder von dieser abgewickelt. Da die Wickelrichtungen der Zugstrangabschnitte 8, 11 auf den Antriebsrollen 9, 10 einander entgegengesetzt sind, werden somit je nach Drehrichtung des Motors der eine Zugstrangabschnitt auf die zugehörige Antriebsrolle aufgewickelt und der andere Zugstrangabschnitt von der zugehörigen Antriebsrolle abgewickelt. Zum Ausgleichen der Längenänderungen des Zugstrangs 8, 11 beim Verfahren des Laufschlittens 3 auf dem gebogenen Dachquerträger 1 ist in den Zugstrang eine Zugfeder 36 eingeschaltet.

Von der Profilleiste 4 wird eine Mitnehmerleiste 14 ausgebildet, die den Seitenrand 5 der Folie 2 mit Abstand übergreift und dadurch eine Mitnehmertasche 13 für die Folie bildet. Ähnlich ist über dem anderen Seitenrand 6 der Folie 2 ein diese mit Abstand übergreifender Profilstreifen 16 ausgebildet, der dadurch eine Folienaufnahmetasche 15 bildet, in welche die beim Öffnen des Foliendaches zusammengeschobene Folie 2 hineingeschoben wird. Da der Abstand der Mitnehmerleiste 14 über der Folie 2 größer als der Abstand des Profilstreifens 16 über der Folie 2 ist, wird letzterer im voll geöffneten Zustand von der Mitnehmerleiste 14 übergriffen, so daß die zusammengeschobene Folie 2 z.B. gegen Wind geschützt ist.

In der Ausführungsform der Laufschlitten 3 nach Fig. 2 weisen die Dachquerträger 1 ein Rundhohlprofil auf und werden von einer oberen und einer unteren Laufrolle 7 mit einem an den Durchmesser des Dachquerträgers 1 angepaßten Seilrollenprofil umgriffen, so daß die Laufschlitten 3, die gegen ihr Drehen um den jeweiligen Dachprofilträger 1 durch ihre gegenseitige Kupplung mittels der Profilleiste 4 gesichert sind, an den Dachquerträgern 1 seitlich geführt werden. Der Zugstrang 8, 11 ist mithilfe von Schraubklemmen 37 in der Quermitte der Unterseite des Laufschlittens 3 an diesem festgeklemmt.

Die Ausführungsform aus Fig.3 entspricht weitgehend derjenigen aus Fig. 1, was durch die gleichlautenden Bezugszahlen für gleiche Teile angegeben ist. Ein wesentlicher Unterschied liegt jedoch darin, daß bei der Ausführungsform aus Fig. 3 der Zugstrang 8, 11 mit seinem oberen Trum im wesentlichen abstandsgleich zu dem gebogen verlaufenden Dachquerträger auf Führungsrollen 30 geführt ist, die in entsprechend unterschiedlicher Höhenlage auf entlang des Dachquerträgers im Abstand voneinander angeordneten Stützen 32 gelagert sind. Durch eine derartige Führung des Zugstrangtrums auf entsprechend des Dachquerträgerverlaufs annähernd bogenförmiger Bahn ändert sich die Länge des oberen Zugstrangtrums beim Verfahren des Laufschlittens 3 zum Öffnen oder Schließen des Daches nicht, so daß die Zugfeder 36 aus Fig. 1 entfallen kann.

Außerdem wird die Folie 2 bei der Ausführungsform aus Fig. 3 von bogenförmigen Begrenzungsstangen 27 mit Abstand überspannt, wodurch die Größe der sich bei Zusammenschieben der Folie 2 bildenden Falten begrenzt wird und ein Aufblähen der Folie 2 durch Windeinfluß während des Öffnens des Daches verhindert wird.

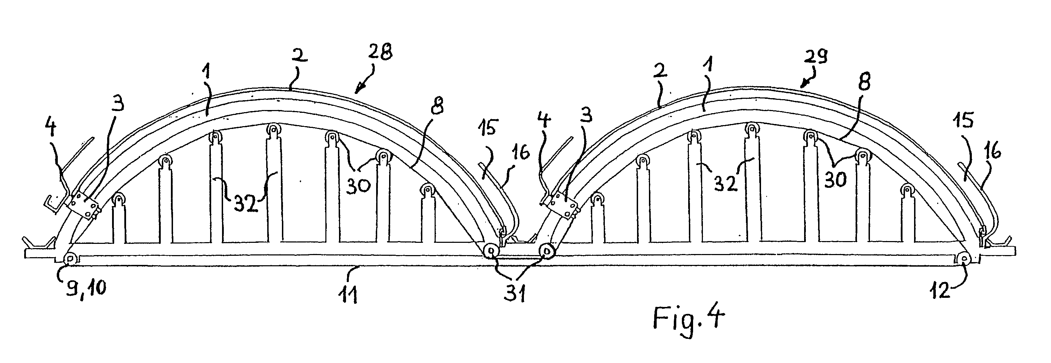

Gemäß Fig. 4 weist das Foliendach mehrere Tonnendachabschnitte 28 und 29 auf, die in ihrem Aufbau jeweils dem Tonnenfoliendach aus Fig. 3 entsprechen. Dies ergibt sich aus den jeweiligen gleichlautenden Bezugszahlen für gleiche Teile. Die Dachabschnitte 28 und 29 können gemeinsam geöffnet und wieder geschlossen werden, wozu der Zugstrangabschnitt 8 an den Dachquerträgern 1 beider Dachabschnitte 28, 29 entlanggeführt ist und beide Laufschlitten 3 an dem Zugstrangabschnitt 8 festgelegt sind. Zwischen den Dachabschnitten 28, 29 wird der Zugstrangabschnitt 8 mittels mittlerer Umlenkrollen 31 umgelenkt und am hinteren Rand des zweiten Dachabschnitts 29 wird der Zugstrang an der Umlenkrolle 12 wieder nach vorn umgelenkt, sodaß er mit seinem Zugstrangabschnitt 11 zu den Antriebsrollen 9, 10 zurückläuft, die am vorderen Dachrand des vordersten Dachabschnittes 28 angeordnet sind.

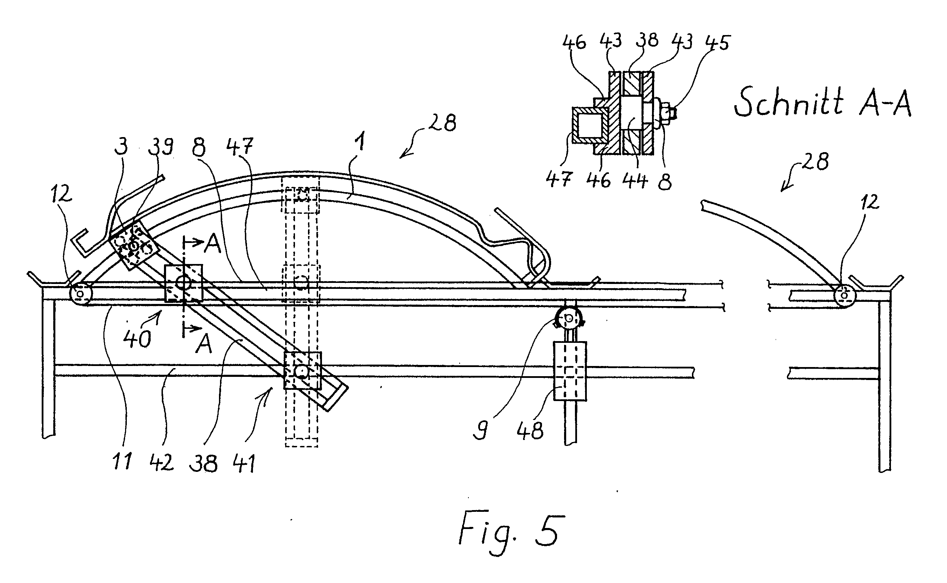

Fig. 5 zeigt eine weitere Ausführungsform mit einem Antriebshebel. Der Antriebshebel 38 ist mittels eines Gelenks 39 an seinem oberen Ende an dem Laufschlitten 3 schwenkbar angelenkt. Über eine obere Gleitführung 40 ist der Antriebshebel 38 mit dem oberen Zugstrangtrum 8 verbunden. Mittels einer entsprechenden Gleitführung 41 ist der Antriebshebel 38 mit seinem unteren Endabschnitt in der Quermitte des Dachabschnittes 28 bzw. in Höhe des Scheitels des bogenförmigen Dachquerträgers 1 unter demselben auf einer Sehne des Bogens an einen Träger 42 des Gewächshauses schwenkbar angelenkt.

Die Konstruktion der Gleitführung 40 ist aus dem Schnitt A-A ersichtlich. Wesentlicher Bestandteil der Gleitführung sind die Führungsplatten 43. Zwischen den Führungsplatten 43 ist der Antriebshebel 38 über einen einen Führungsschlitz, der in dem geraden Antriebshebel 38 in Längsrichtung desselben verläuft, gleitend durchgreifenden Bolzen 44 um diesen schwenkbar und gegenüber diesem verschiebbar geführt, so daß sich der zu dem Laufschlitten 3 führende Arm des Antriebshebels 38 bei dessen Schwenkbewegung in seiner Länge entsprechend des bogenförmigen Verlaufs des Dachquerträgers 1 bzw. der bogenförmigen Bahn des Laufschlittens 3 verändern kann. Der Zugstrang ist über geeignete Befestigungsmittel wie hier einer Klemmutter 45 mit der Gleitführung 40 verbunden. Damit aufgrund der senkrecht zu dem Zugstrang 8 aufgrund des Antriebshebels 38 wirkenden Kraftkomponente der Zugstrang nicht nach oben oder unten im Bereich der Gleitführung 40 ausweichen kann, ist die Gleitführung 40 zusätzlich über Führungsansätze 46 längs des Trägers 47 geführt, womit der Träger 47 die entsprechende Kraftkomponente aufnimmt.

Die Führung 41 am unteren Antriebshebelende ist, wie bereits weiter oben erwähnt, ähnlich gestaltet. Auch hier durchgreift ein Bolzen der Gleitführung 41 einen in dem unteren Endabschnitt des Antriebshebels 38 in dessen Längsrichtung verlaufenden Führungsschlitz, so daß sich der Abstand zwischen den Gleitführungen 40, 41 bzw. zwischen dem Laufschlitten 3 und der unteren Gleitführung 41 während der Schwenkbewegung des Antriebshebels 38 um den Bolzen der Gleitführung entsprechend der bogenförmigen Bahn des Laufschlittens 3 verändern kann. Jedoch entfällt für die Gleitführung 41 eine besondere Führung über Führungsansätze, da die untere Gleitführung 41 anders als die obere Gleitführung im Bezug auf den Träger 42 und damit im Bezug auf das gesamte Gewächshaus ortsfest abgestützt ist.

Der Zugstrang 11 ist, wie bereits anhand anderer Ausführungsformen erläutert, unterbrochen und von beiden Seiten mit entgegengesetzter Umschlingungsrichtung auf das Antriebsrohr 9 geführt. Dieses kann von dem Elektromotor 48 in beiden Drehrichtungen angetrieben werden. An den Enden der Halle, die beliebig viele einzelne Tonnendachabschnitte 28 aufweisen kann, befinden sich jeweils die Umlenkrollen 12, die das gesamte Zugseil in das Zugstrangtrum 8 und das Zugstrangtrum 11 unterteilen.

Erfolgt die Betätigung des Hallen-Foliendaches zum Öffnen aus der geschlossenen Stellung heraus, in welcher sich der Laufschlitten 3 in der Darstellung in Fig. 5 am linken Ende des Dachquerträgers 1 befindet, so wird der Antriebshebel 38 von der oberen Gleitführung 40, an dem der Zugstrang 8 angreift, um den Bolzen der unteren Gleitführung 41 im Uhrzeigersinn geschwenkt und schiebt dabei den Schlitten 3 längs des Dachquerträgers 1 nach rechts in die geöffnete Stellung. In Fig. 5 zeigen die ausgezogenen Linien die fast geschlossene Stellung und die Darstellung in gestrichelten Linien die Stellung des Antriebshebels 38 bei halb geöffnetem Foliendach. Wie in der gestrichelten Darstellung erkennbar ist, haben die Gleitführungen 40 und 41 ihre Lage relativ zu dem Arbeitshebel 38 in der halb geöffneten Stellung gegenüber der fast geschlossenen Stellung geändert.

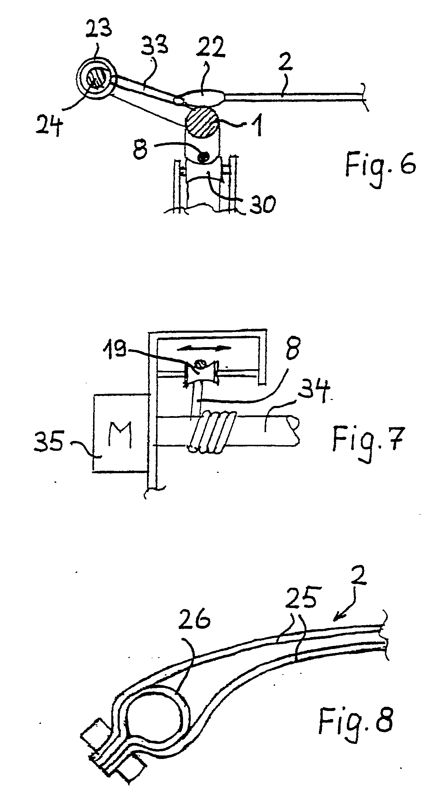

Nach dem Detail aus Fig. 6 wird die Folie auf den äußersten Dachquerträgern 1 mittels an ihren Stirnrändern festgelegten Gleitern 22 gleitend geführt, die ihrerseits über Haltebänder 33 mittels Ringen 23 geführt sind, welche gleitend auf abstandsgleich entlang der Dachquerträger 1 sich erstreckenden gebogenen Führungsstangen 24 laufen, die außerhalb des Foliendaches seitlich oberhalb der äußeren Dachquerträger 1 angeordnet sind. Mittels der Ringe 23 und der Haltebänder 33 wird die Folie 2 in Richtungen parallel zum Dachfirst leicht gespannt gehalten, wodurch die Gleiter 22 mit geringer Reibung auf den äußeren Dachquerträgern aufliegend geführt werden.

Nach Fig. 7 ist der Zugstrangabschnitt 8 zwischen dem hier verwendeten Antriebsrohr 34 und dem Laufschlitten (hier nicht gezeigt) nahe des von dem Motor 35 antreibbaren Antriebsrohres 34 um eine Umlenkrolle 19 geführt, die zur Anpassung an die Länge des auf dem Antriebsrohr 34 aufgewickelten Zugstrangsabschnittes auf ihrer Achse gleitend verschiebbar geführt ist, wodurch bei dessen Aufwickeln die Wickelwindungen sauber nebeneinander zu liegen kommen und diese für sein Abwickeln einander nicht sperren können.

Gemäß Fig. 8 ist an dem einen Seitenrand der doppelwandigen Folie 2 zwischen deren Folienwänden 25 ein aufblasbarer Schlauch 26 eingesetzt. Durch Aufblasen des Schlauches 26 bei geschlossenem Foliendach können daher die Folienwände gespannt werden, um ein Folienflattern bei Wind zu vermindern.

## Ansprüche

1. Hallen-Foliendach, insbesondere Gewächshaus-Foliendach, in Form eines Satteldaches oder vorzugsweise eines Tonnendaches, mit mehreren im Abstand voneinander verlaufenden Dachquerträgern (1), die mit einer ein- oder doppelwandigen Folie (2) überspannt sind, dadurch gekennzeichnet, daß auf mehreren oder allen Dachquerträgern (1) je ein längs diesen verfahrbarer Laufschlitten (3) angeordnet ist und die Laufschlitten (3) über eine Profilleiste (4) miteinander verbunden sind, an der die Folie (2) mit ihrem einen Seitenrand (5) befestigt ist, die mit ihrem gegenüberliegenden Seitenrand (6) ortsfest festgelegt ist.

2. Hallen-Foliendach nach Anspruch 1, dadurch gekennzeichnet, daß zum Antreiben der Laufschlitten an wenigstens einem Laufschlitten (3) oder an der Profilleiste (4) ggf. unter Zwischenschaltung eines Antriebshebels (38) ein als Band oder Seil ausgebildeter Zugstrang (8, 11) befestigt ist, der um wenigstens eine Antriebsrolle (9, 10) oder ein Antriebsrohr (34) verläuft.

3. Hallen-Foliendach nach Anspruch 2, dadurch gekennzeichnet, daß der Zugstrang (8, 11) zwei freie Endabschnitte aufweist, zwischen denen der Laufschlitten (3) bzw. die Profilleiste (4) befestigt ist und die ihrerseits an der zugeordneten Antriebsrolle (9, 10) bzw. dem Antriebsrohr (34) aufwickelbar bzw. abwickelbar befestigt sind.

4. Hallen-Foliendach nach Anspruch 3, dadurch gekennzeichnet, daß die beiden Endabschnitte des Zugstrangs (8, 11) auf zwei koaxialen, fest miteinander gekuppelten Antriebsrollen (9, 10) bzw. auf einem gemeinsamen Antriebsrohr (34) auf- und abwickelbar befestigt sind und die Antriebsrollen (9,10) bzw. das Antriebsrohr (34) von einem reversierbaren Motor angetrieben sind bzw. ist, wobei die Umschlingungsrichtungen der Endabschnitte auf den Antriebsrollen (9, 10) bzw. dem Antriebsrohr (34) einander entgegengesetzt sind.

5. Hallen-Foliendach nach Anspruch 4, dadurch gekennzeichnet, daß mehrere Dachabschnitte (28, 29) hintereinander ausgebildet sind, die gesonderte Folien (2), Dachquerträger (1), Laufschlitten (3) und Profilleisten (4) nach Anspruch 1 aufweisen, wobei der Zugstrang (8, 11) und die Antriebsrollen (9, 10) bzw. das Antriebsrohr (34) allen Dachabschnitten (28, 29) gemeinsam sind.

6. Hallen-Foliendach nach Anspruch 3, dadurch gekennzeichnet, daß der Zugstrangabschnitt (8), der zwischen dem Laufschlitten (3) und der Antriebsrolle (9, 10) bzw. dem Antriebsrohr (34) verläuft, über eine nahe der Antriebsrolle (9, 10) bzw. dem Antriebsrohr (34) angeordnete Umlenkrolle (19) geführt ist, die auf ihrer Achse (20) axial verschiebbar ist.

7. Hallen-Foliendach nach einem der Ansprüche 2 bis 6, dadurch gekennzeichnet daß in der Ausbildung als Tonnendach mit bogenförmigen Dachquerträgern (1) der Zugstrang (8) entlang des betreffenden Dachquerträgers (1) für einen zu demselben im wesentlichen abstandsgleichen Verlauf geführt ist.

8. Hallen-Foliendach nach Anspruch 7, dadurch gekennzeichnet, daß zum Führen des Zugstrangs (8) Führungsrollen (30) in entsprechend des bogenförmigen Verlaufs der Dachquerträger (1) unterschiedlichen Höhenlagen vorgesehen sind.

9. Hallen-Foliendach nach einem der Ansprüche 2 bis 6, dadurch gekennzeichnet, daß der Antriebshebel (38) mit seinem oberen Ende an den Laufschlitten (3) und mit seinem unteren Ende an das Gewächshaus angelenkt ist, wobei der Zugstrang (8) zwischen den beiden Anlenkstellen mittels einer längs des Antriebshebels (38) verschiebbaren Gleitführung (40) an dem Antriebshebel (38) angreift.

10. Hallen-Foliendach nach Anspruch 9, dadurch gekennzeichnet, daß der Antriebshebel (38) ein Teleskoparm ist oder das untere Ende des Antriebshebels (38) in Form einer längs desselben verschiebbaren Gleitführung (41) an das Gewächshaus schwenkbar angelenkt ist.

11. Hallen-Foliendach nach einem der Ansprüche 1 bis 10, dadurch gekennzeichnet, daß die Folie (2) an ihrem parallel zu den Dachquerträgern (1) verlaufenden freien Folienrändern (21) auf den äußeren Dachquerträgern (1) aufliegende Gleiter (22) aufweist, die an Ringen (23) längs der äußeren Dachquerträger (1) oder seitlich oberhalb der äußeren Dachquerträger (1) längs einer Gleitstange (24) geführt sind.

12. Hallen-Foliendach nach einem der Ansprüche 1 bis 11, dadurch gekennzeichnet, daß an der Profilleiste (4) eine den benachbarten Folienseitenrand (5) mit Abstand übergreifende, eine Folienmitnehmertasche (13) ausbildende Mitnehmerleiste (14) angeordnet ist.

13. Hallen-Foliendach nach einem der Ansprüche 1 bis 12, dadurch gekennzeichnet, daß an demjenigen Dachrand, an dem die Folie (2) mit ihrem einen Seitenrand (6) festgelegt ist, ein diesen mit Abstand übergreifender, eine Folienaufnahmetasche (15) bildender Profilstreifen (16) angeordnet ist, wobei die Weite der Mitnehmertasche (13) größer als die Weite der Aufnahmetasche (15) ist.

14. Hallen-Foliendach nach einem der Ansprüche 1 bis 13, dadurch gekennzeichnet, daß die Dachquerträger (1) ein Rundprofil aufweisen und die Laufschlitten (3) auf dem zugeordneten Dachquerträger (1) abrollende Laufrollen (7) aufweisen, von denen wenigstens eine mit Führungsflanschen versehen ist oder die Form einer Seilrolle hat.

15. Hallen-Foliendach nach einem der Ansprüche 1 bis 14, dadurch gekennzeichnet, daß in der doppelwandigen Folie (2) zwischen deren Wänden (25) ein aufblasbarer Schlauch (26) zum Spannen der Folienwände (25) ausgebidet ist.

16. Hallen-Foliendach nach einem der Ansprüche 1 bis 15, dadurch gekennzeichnet, daß im Abstand über den Dachquerträgern (1) ein Folienflattern begrenzende Begrenzungsstangen (27) angeordnet sind.

Fig.2

Fig.1

Fig.3

EP 0 432 133 A1

Fig. 4

EP 0 432 133 A1

Schnitt A-A

Fig. 5

Fig. 6

Fig. 7

Fig. 8

**Europäisches
Patentamt**

**EUROPÄISCHER
RECHERCHENBERICHT**

Nummer der Anmeldung

**EP 91 10 0278**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 239 516  (JOURNIAC)<br>* Zusammenfassung * * Spalte 3, Zeile 65 - Spalte 4, Zeile 46; Figuren 8, 9 *<br>– – – | 1,2,3,4 | A 01<br>G 9/24<br>A 01 G 9/22 |
| Y | FR-A-2 431 827  (RANTZ)<br>* Seite 4, Zeile 10 - Seite 5, Zeile 36; Figuren 1, 2 *<br>– – – | 3,4 | |
| X | EP-A-0 124 456  (RHONE-POULENC FILMS)<br>* Seite 6, Zeile 6 - Seite 10, Zeile 33; Figuren 1-4 *<br>– – – | 1 | |
| X | US-A-4 348 833  (TAKATO NAGOYA)<br>* Spalte 3, Zeile 8 - Spalte 5, Zeile 48; Figuren 2-7 *<br>– – – – – | 1 | |

| RECHERCHIERTE SACHGEBIETE (Int. Cl.5) |
|---|
| A 01 G |

**Der vorliegende Recherchenbericht wurde für alle Patentansprüche erstellt**

| Recherchenort | Abschlußdatum der Recherche | Prüfer |
|---|---|---|
| Den Haag | 08 März 91 | HERYGERS J.J. |